(19)

**Europäisches Patentamt**

**European Patent Office**

**Office européen des brevets**

(11) **EP 3 045 339 A1**

(12) **EUROPEAN PATENT APPLICATION**

(43) Date of publication:
**20.07.2016 Bulletin 2016/29**

(51) Int Cl.:
**B60K 17/36** (2006.01)

(21) Application number: **15150992.4**

(22) Date of filing: **13.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Meritor Heavy Vehicle Systems Cameri SpA**
**28062 Cameri (NO) (IT)**

(72) Inventor: **Fratelli, Marco**
**27029 Vigevano (PV) (IT)**

(74) Representative: **Jones, John Bryn**
**Withers & Rogers LLP**
**4 More London Riverside**
**London SE1 2AU (GB)**

(54) **Tandem drive axle**

(57)    A forward rear axle of a tandem drive axle assembly, wherein the forward rear axle has an input shaft on a first rotational axis, a pinion on a second rotational axis and spur gears one each on said axes to transmit drive from said input shaft to said pinion, wherein the spur gear on the first rotational axis has a greater number of teeth than the spur gear on the second rotational axis.

FIG. 2

EP 3 045 339 A1

## Description

TECHNICAL FIELD

This invention relates to a tandem drive axle for a heavy goods vehicle.

BACKGROUND TO THE INVENTION

A typical heavy goods vehicle has a tandem rear axle comprising a forward rear axle and a close coupled rear rear axle. Both axles are normally driven, but apparatus may be provided to disengage drive to one of the axles when the vehicle is lightly loaded. Furthermore the undriven axle may in some circumstances be raised from the ground to reduce rolling resistance of the vehicle, and to eliminate tyre scrub on cornering.

Each axle of a tandem drive axle includes a differential gear to allow the wheels thereof to rotate at different speeds when cornering. Furthermore an inter-axle differential gear is provided to allow even distribution of drive torque between the axles.

Necessarily, a through drive shaft is provided from the forward rear axle to the rear rear axle, and is generally co-axial with the input shaft to the forward rear axle. This through drive shaft must pass through the casing of the forward rear axle, whilst avoiding the usual crown wheel of the forward rear axle and the bearings associated therewith.

Tandem rear axles are, provided for a wide range of vehicles, and in order to accommodate different wheel sizes, tyre sizes and gearboxes, it is usual to allow one of several rear axle speed ratios to be specified within a common axle housing.

For reasons of fuel economy it is becoming increasingly important to match the rear axle speed ratios to the torque characteristic of the vehicle engine, so that a large number of alternative speed ratios is desirable.

The speed ratio of any pair of gear wheels is generally determined by the number of teeth on each gear, and this is in turn influenced by the required size and strength of each tooth. Accordingly, in practice, the number of different axle ratios which can be provided may be restricted by the minimum tooth size. Nevertheless a progressive range of speed ratios is desirable, from which the most appropriate speed ratio can be selected.

High axle ratios, by which we mean speed ratios permitting a high road speed (sometimes called a 'fast' ratio), have a relatively large diameter drive pinion. Furthermore a large diameter drive pinion will require the corresponding crown wheel to be positioned at a greater transverse distance, where it may also reduce the clearance to the through drive shaft.

Thus, within a standard axle casing of the forward rear axle, the available range of rear axle speed ratios is generally further restricted by the position of the rotational axes and the bearings associated therewith. A wider range of rear axle speed ratios would require an increased size of axle casing at greater weight and cost, but a larger casing may not be required for the majority of axles which have speed ratios within a narrower range. It would however be advantageous to accommodate within a smaller standard axle casing the wider range of axle speed ratios, including axle ratios below 2-5:1. Such speed ratios should preferably be pre-existing ratios which are available for a single drive rear axle where space constraints are not a limiting factor.

In this specification the words 'drive' and 'driven' refer to a direction of driving torque from the engine to the vehicle wheels.

According to a first aspect of the invention there is provided a forward rear axle of a tandem drive axle assembly, wherein the forward rear axle has an input shaft on a first rotational axis, a pinion on a second rotational axis and spur gears one each on said axes to transmit drive from said input shaft to said pinion, wherein the spur gear on the first rotational axis has a greater number of teeth than the spur gear on the second rotational axis.

In such an axle, the spur gears provide a gearing up of the input speed so that the speed reduction provided by the crown wheel and pinion need not be so great. Thus a casing of increased size is not necessary to suit the occasional specification of a high axle ratio in the forward rear axle of a tandem drive axle.

Typically the first and second rotational axes are parallel. The spur gears preferably have helical teeth. In one embodiment the smaller of two spur gears is not less than 75% of the diameter of the larger of the two spur gears.

The forward rear axle may include a through drive shaft for the rear rear axle, said through drive shaft being journalled for rotation in a casing of the forward rear axle, preferably by rolling element bearings.

The forward rear axle may further include a crown wheel engaged with said pinion, and journalled for rotation in the axle casing by rolling element bearings.

The forward rear axle may further include within said casing an inter-axle differential gear having oppositely directed output shafts. In an embodiment one of said output shafts is coaxial about the input shaft, and has one of said spur gears rotatable therewith.

In a second aspect of the invention there is provided a tandem drive axle comprising a forward rear axle and a rear rear axle, said first rear axle having a different overall speed ratio to said rear rear axle.

Such an arrangement may be a consequence of the number of gear teeth of a spur gear pair of the pinion of the forward rear axle and the speed ratio of a crown wheel and pinion which is common to the forward rear axle and rear rear axle.

Provided the difference in speed ratio is small, preferably less than 1%, it can be accommodated in an inter-axle differential gear by slow relative rotation thereof. Such a differential gear is preferably provided in the casing of the forward rear axle. The arrangements of the first aspect of the invention may be applied to the second aspect of the invention.

In a third aspect of the invention there is provided a drive axle comprising a casing, an input shaft; a crown wheel and pinion within the casing, and a spur gear connecting the input shaft to said pinion, wherein said pinion rotates faster than said input shaft in use. In such an arrangement the spur gears increase the speed of the pinion, whereas the crown wheel and pinion ensure an overall speed reduction in the drive axle. The speed increase provided by the spur gears is less than the speed decrease provided by the crown wheel and pinion, and in one embodiment is less than 50% of the crown wheel and pinion ratio.

In one embodiment two spur gears have a speed ratio of between 1·33:1 and 1:1, and the crown wheel and pinion speed ratio is greater than 2·4:1.

In one embodiment the effective diameter ratio of the input spur gear and output spur gear is less than 1·4:1.

The invention permits substitution of spur gears to alter an overall speed ratio of the drive axle so as to give a range of different ratio whilst using a common crown wheel and pinion gears.

In one example a crown wheel and pinion speed ratio of 2·467:1 can be used with spur gears having the following numbers of teeth 31/31; 32/30; 35/31; 36/30; 38/30; 36/27.

Features of the first and second aspect of the invention may be applied to the third aspect of the invention.

BRIEF DESCRIPTION OF DRAWINGS

Other features of the invention will be apparent from the following description of an embodiment, shown by way of example only in the accompanying drawings in which:-

Fig. 1 shows illustratively a heavy goods vehicle having a tandem drive rear axle.

Fig. 2 shows in elevation a schematic arrangement of a tandem drive rear axle;

Fig. 3 shows the arrangement of Fig. 2 from above;

Fig. 4 shows an embodiment of the invention from above.

Fig. 5 is a table of 15 speed ratios obtainable with the invention.

Fig. 6 shows the speed ratios of Fig. 5 in graphical form.

DESCRIPTION OF AN EMBODIMENT

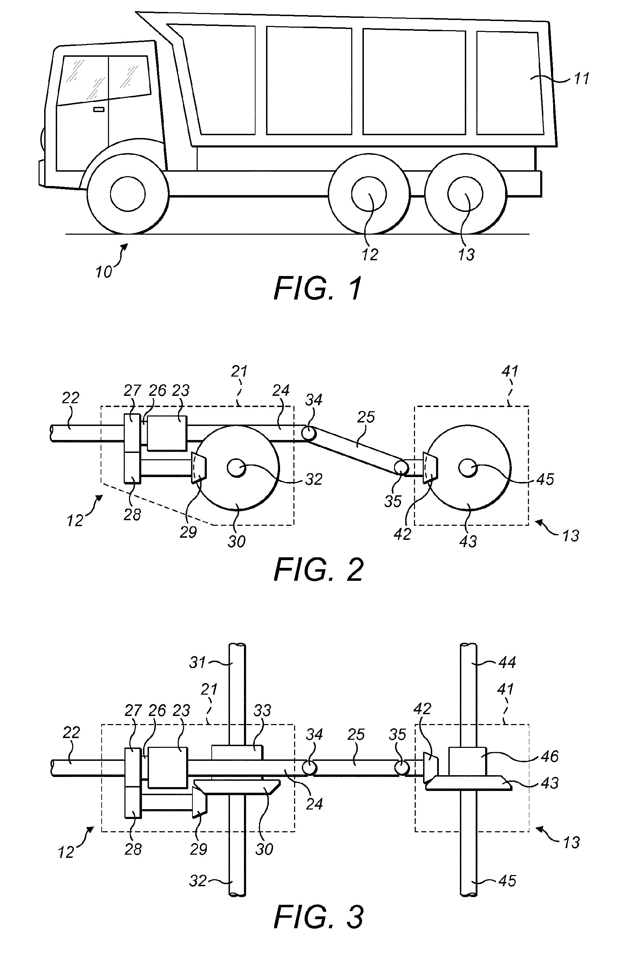

With reference to the drawings, Fig. 1 illustrates a typical heavy goods vehicle 10 having a tipping body 11 and a tandem rear axle comprising a forward rear axle 12 and a rear rear axle 13.

Fig. 2 and 3 illustrate a typical drive arrangement for a double drive tandem axle comprising a front casing 21 of the forward rear axle 12, and a rear casing 41 of the rear rear axle 13.

An input shaft 22, typically the vehicle propeller shaft is connected to an inter-axle differential gear 23 within the front casing 21. The differential gear 23 has oppositely facing output shafts; the rear facing output shaft comprises a through drive shaft 24 which is coupled via an inter axle propeller shaft 25 to the rear rear axle 13, and the forward facing output shaft 26 surrounds the input shaft 22 and is connected via spur gears 27, 28 to the drive pinion 29 of the forward rear axle. This drive pinion 29 is a coupled to the front crown wheel 30, and drives output half-shafts 31, 32 via the usual front axle differential gear 33.

The inter-axle propeller shaft has universal joints 34, 35 at the ends thereof to allow independent suspension movement of the axles, and is connected to the drive pinion 42 of the rear rear axle. This drive pinion 42 is coupled to the rear crown wheel 43 and drives the output half-shafts 44, 45 via the usual rear axle differential gear 46.

The arrangement of Figs. 2 and 3 is conventional; bearing arrangements for the rotating elements are omitted for reasons of clarity, as are the internal components of the differential gears 23, 33, 46. All of the illustrated components will be familiar to a person skilled in vehicle engineering. The forward rear axle may include a dog clutch (not shown) to allow disconnection of drive to the through drive shaft 24 or to the spur gear 27 on demand, or to lock and unlock the inter-axle differential gear 23.

The forward rear axle casing 21 is typically of standardized design able to accommodate a range of final drive gear ratios, which are in each case determined by selection of an appropriate ratio of crown wheel and pinion. Generally speaking a larger diameter pinion 29 will give a 'high' ratio and, to accommodate the larger diameter pinion, the crown wheel 30 is shifted transversely on the housing of the differential gear 33. A typical forward rear axle casing may accommodate final drive ratios in the range 2-5:1 to 6-2:1. The high ratio (2-5:1) is suitable for highway use, whereas the low ratio (6-2:1) is suitable for off-highway use.

From Fig. 3 it will be observed that the through drive shaft 24 passes over the differential gear 33 and is adjacent the back face of the crown wheel 30. As the diameter of the front pinion 29 increases (to provide a higher ratio), the crown wheel must be positioned closer to the through drive shaft, and this may be a limiting factor in determining the highest final drive gear ratio that can be accommodated without substantial re-design of the axle casing. It may also be attempted to move the through drive shaft 24 transversely to accommodate transverse re-positioning of the crown wheel, but interference with bearings of the front differential gear 33, or of the half-shaft 31 may be encountered.

The spur gears 27, 28 are typically helical gears, and are the same size, giving a gear ratio of 1:1. This arrangement ensures that both front and rear rear axles have the same final drive ratio, which is an important requirement in avoiding undue rotation within the inter-axle differential gear 23.

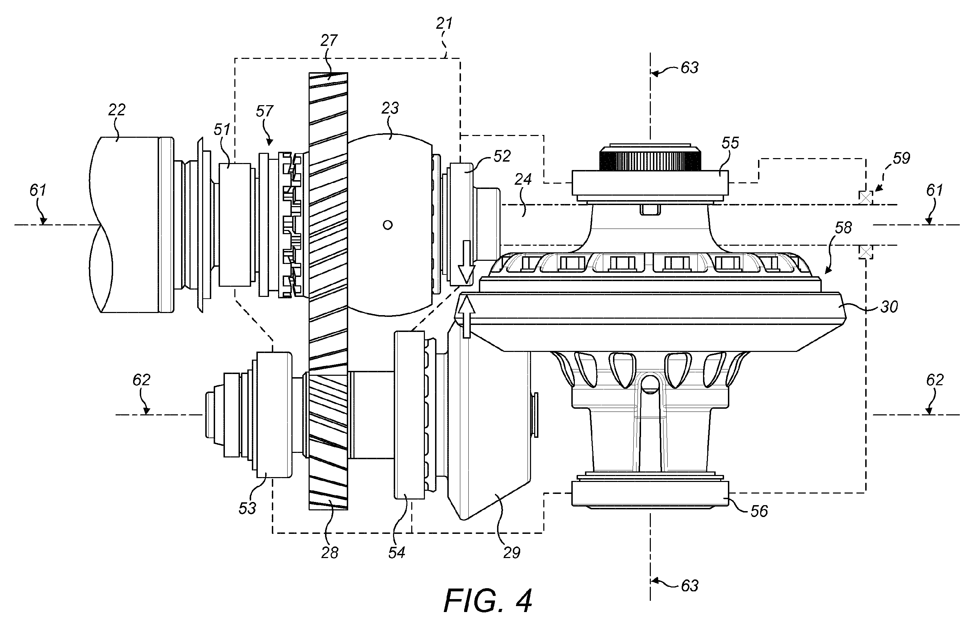

Fig. 4 illustrates schematically a forward rear axle according to the invention, and in which components corresponding to Figs. 2 and 3 carry the same reference numerals.

The front axle casing 21 supports an inter-axle differential gear 23 by means of rolling element bearings 51, 52, and a pinion gear 29 by means of rolling element bearings 53, 54. The crown wheel 30 and differential 33 are supported by rolling element bearings 55, 56.

A dog clutch 57 is provided to lock/unlock the inter-axle differential gear 23, so that wheel spin is reduced in conditions of poor traction. The through drive shaft to the rear rear axle is illustrated by chain-dot lines, and is arranged substantially as shown in Fig. 3. A rolling element support bearing 59 may be provided in the casing 21.

Axes of rotation 61, 62, 63 are respectively shown for the input shaft 22, the pinion gear 29 and the crown wheel 30.

In Fig. 3 generally orthogonal axes are illustrated in the forward rear axle and rear rear axle. It will be understood that in certain circumstances a slight departure from orthogonality may be accommodated, for example <5°, in order to meet design constraints, provided that suitable bearings are provided to accommodate side thrust.

Fig. 4 illustrates a limiting case in which the highest speed ratio has a relatively large diameter pinion gear 29, and the crown wheel has only a small clearance to the bearing 52; furthermore the back face 58 of the crown wheel 30 is in practice close to the through drive shaft.

In order to obtain still higher speed ratios in the rear axle of Fig. 4, the input spur gear 27 is of larger diameter than the output spur gear 28. Several different diameters of spur gear 27, 28 can be accommodated between the fixed axes 61, 62 as will become apparent.

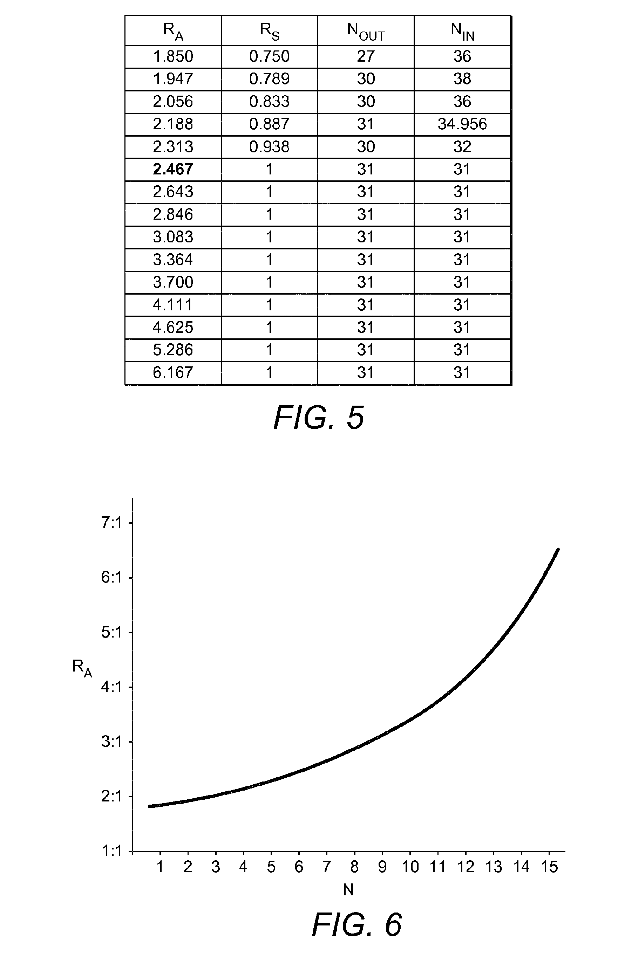

Fig. 5 is a table of speed ratios which the invention provides for the forward rear axle of a tandem axle. Overall axle ratio is represented by $R_A$; spur gear ratio by Rs, the number of teeth on the input pinion by $N_{IN}$, and the number of teeth on the output pinion by $N_{OUT}$.

It can be seen that for the lower group of axle ratios (2·467 to 6·167), the spur gears are provided equally with 31 teeth giving a speed ratio Rs of 1:1. This lower group of axle ratios can be accommodated by suitable variation of the diameters of pinion gear 29 and crown wheel 30.

A group of five higher speed ratios is also provided, being regularly spaced ratios of crown wheel and pinion which are available for a single drive axle where space constraints do not apply. These crown wheel and pinion pairs may be provided in the rear rear axle of a tandem axle arrangement, but cannot be installed in a standardized forward rear axle for the reasons noted above, principally interference as a result of the larger diameter pinion gear.

In the group of five higher ratios, the number of teeth in the spur gear pair 27, 28 are not the same; the drive gear is of larger diameter than the driven gear. Fig. 5 shows the number of gear teeth on the drive gear ($N_{IN}$), and on the mating drive gear ($N_{OUT}$).

Four of the higher speed ratios ($R_A$), namely 1·850, 1·947, 2·056 and 2·313 can be achieved exactly by applying an uneven spur gear pair to the highest ratio of the group of lower speed ratios.

Thus:

$$30/32 * 2\cdot467 = 2\cdot313$$
$$30/36 * 2\cdot467 = 2\cdot056$$
$$30/38 * 2\cdot467 = 1\cdot947$$
$$27/36 * 2\cdot467 = 1.850$$

However the final higher speed ratio (2·188) must be approximated:

$$31/35 * 2\cdot467 = 2\cdot178$$

These ratios are however so close that a slight difference in rotational speed of the through drive shaft 24 and the forward facing output shaft 26 can be accommodated by relative rotation within the inter-axle differential gear 23; this difference is of the order of 0.5%, and is acceptable.

Fig. 5 shows that for this ratio (2·188), the exact number of teeth of the drive spur gear 27 would be 34·956, for which the closest number of whole gear teeth is 35.

Fifteen alternative rear axle ratios are provided in the table of Fig. 5. Fig. 6 illustrates that these ratios form a geometric progression, showing ratio number (N) plotted against overall axle ratio ($R_A$). Such a geometric progression provides a convenient characteristic from which an axle ratio may be selected with confidence. The fifteen ratios of Fig. 6 are spaced to cover a range from 1·85: to 6·167:1, as may be provided in a single rear axle by variation of the number of pinion and crown wheel teeth.

**Claims**

1. A forward rear axle of a tandem drive axle assembly, wherein the forward rear axle has an input shaft on a first rotational axis, a pinion on a second rotational axis and spur gears one each on said axes to transmit drive from said input shaft to said pinion, wherein the spur gear on the first rotational axis has a greater number of teeth than the spur gear on the second rotational axis.

2. A forward rear axle according to claim 1, wherein said axes are parallel.

3. A forward rear axle according to claim 1 or claim 2, wherein said spur gears have a tooth ratio of one of: 36/27, 38/30, 36/30, 35/31 and 32/30.

4. A forward rear axle according to any of claims 1-3 and further comprising on said rotational axis a through drive shaft for a rear rear axle.

5. A forward rear axle according to any of claims 1-4 and having an overall speed ratio of 2·45:1, or less.

6. A forward rear axle according to any preceding claim and having a crown wheel engaged with said pinion, said crown wheel being on a third rotational axis substantially orthogonal to said second rotational axis, the teeth of said crown wheel facing towards said second rotational axis.

7. A forward rear axle according to claim 6 wherein the teeth of said crown wheel faces away from said first axis.

8. A forward rear axle according to any preceding claim and comprising an inter-axle differential gear having a drive shaft within a first driven shaft on said first rotational axis, said first driven shaft being coupled to the spur gear on said first rotational axis.

9. A forward rear axle according to claim 8, wherein said differential gear has a second driven shaft extending oppositely to said first driven shaft, said second driven shaft being rotatable on said first rotational axis.

10. A forward rear axle according to claim 9 and including a casing containing said spur gears, pinion, crown wheel and inter-axle differential therein.

11. A forward rear axle according to claim 10, and further comprising a dog clutch providing a disengageable engagement of said inter-axle differential.

12. A forward rear axle according to claim 11, wherein said dog clutch is coaxial with said input shaft.

13. A tandem drive axle comprising a forward rear axle according to any of claims 1 to 12, a rear rear axle, and an inter-axle differential gear therebetween, said forward rear axle having a different crown wheel and pinion ratio to said rear rear axle.

14. A tandem drive axle according to claim 11, wherein the difference between the overall speed ratio of the forward rear axle and the rear rear axle is less than 1%.

15. A tandem drive axle according to claim 13 or claim 14, and including in the forward rear axle an input shaft, a crown wheel and a pinion, said pinion rotating in use faster than said input shaft.

FIG. 1

FIG. 2

FIG. 3

FIG. 4

EP 3 045 339 A1

| $R_A$ | $R_S$ | $N_{OUT}$ | $N_{IN}$ |
|-------|-------|-----------|----------|
| 1.850 | 0.750 | 27 | 36 |
| 1.947 | 0.789 | 30 | 38 |
| 2.056 | 0.833 | 30 | 36 |
| 2.188 | 0.887 | 31 | 34.956 |
| 2.313 | 0.938 | 30 | 32 |
| **2.467** | 1 | 31 | 31 |
| 2.643 | 1 | 31 | 31 |
| 2.846 | 1 | 31 | 31 |
| 3.083 | 1 | 31 | 31 |
| 3.364 | 1 | 31 | 31 |
| 3.700 | 1 | 31 | 31 |
| 4.111 | 1 | 31 | 31 |
| 4.625 | 1 | 31 | 31 |
| 5.286 | 1 | 31 | 31 |
| 6.167 | 1 | 31 | 31 |

*FIG. 5*

*FIG. 6*

Europäisches
Patentamt

European
Patent Office

Office européen
des brevets

**EUROPEAN SEARCH REPORT**

Application Number

EP 15 15 0992

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 787 845 A1 (DANA CORP [US]) 23 May 2007 (2007-05-23) * paragraph [0026]; figures 3,5 * ----- | 1-15 | INV. B60K17/36 |
| X | US 1 703 536 A (MARCUM ARTHUR I) 26 February 1929 (1929-02-26) * page 2, lines 60-62; figures * ----- | 1-12 | |
| X | US 2004/204282 A1 (GREEN MICHAEL [US] ET AL) 14 October 2004 (2004-10-14) * figures * ----- | 1-15 | |
| X | US 5 860 889 A (SCHLOSSER KRAIG J [US] ET AL) 19 January 1999 (1999-01-19) * lines 44-48 - column 4; figures * ----- | 1-6 | |

TECHNICAL FIELDS
SEARCHED       (IPC)

B60K

The present search report has been drawn up for all claims

| Place of search | Date of completion of the search | Examiner |
|---|---|---|
| Munich | 15 June 2015 | Douhet, Hervé |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 15 0992

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2015

| Patent document cited in search report | | | Publication date | Patent family member(s) | | | Publication date |
|---|---|---|---|---|---|---|---|
| EP 1787845 | | A1 | 23-05-2007 | CN<br>EP<br>US | 1966295<br>1787845<br>2007117672 | A<br>A1<br>A1 | 23-05-2007<br>23-05-2007<br>24-05-2007 |
| US 1703536 | | A | 26-02-1929 | NONE | | | |
| US 2004204282 | | A1 | 14-10-2004 | CA<br>US<br>WO | 2563598<br>2004204282<br>2005110799 | A1<br>A1<br>A1 | 24-11-2005<br>14-10-2004<br>24-11-2005 |
| US 5860889 | | A | 19-01-1999 | NONE | | | |

EPO FORM P0459

For more details about this annex : see Official Journal of the European Patent Office, No. 12/82